# FASCICULE DE BREVET EUROPEEN

(11) **EP 0 664 859 B1**
(45) Date de publication et mention de la délivrance du brevet: **12.06.1996**
(21) Numéro de dépôt: 93920914.4
(22) Date de dépôt: 22.09.1993
(51) Int. Cl.: F16D 65/56, F16D 65/16

(54) **MOTEUR DE FREIN A ENCOMBREMENT REDUIT**
BREMSMOTOR MIT GERINGEN ABMESSUNGEN
SMALL BRAKE BOOSTER

(30) Priorité: 22.10.1992 FR 9212638
(43) Date de publication de la demande: 02.08.1995
(73) Titulaire: ALLIEDSIGNAL EUROPE SERVICES TECHNIQUES, F-93700 Drancy (FR)
(72) Inventeur: MERY, Jean-Claude, F-93320 Pavillons-sous-Bois (FR)
(74) Mandataire: Bentz, Jean-Paul
(86) Numéro de dépôt international: FR9300918
(87) Numéro de publication internationale: WO9409285

(56) Documents cités:
- EP-A- 0 249 522
- FR-A- 2 041 002
- FR-A- 2 630 794
- FR-A- 2 638 214

## Description

La présente invention concerne un moteur de frein comprenant : un corps essentiellement cylindrique rempli d'un fluide hydraulique soumis à une pression variable ; un actionneur mécanique comportant un organe de commande accessible depuis l'extérieur de ce corps ; un piston de frein obturant le corps de façon étanche et susceptible d'y coulisser sous l'effet de l'actionneur pour actionner à son tour au moins un organe de friction ; et un dispositif de réglage automatique disposé à l'intérieur du corps entre l'actionneur mécanique et le piston pour rattraper les jeux résultant de l'usure de l'organe de friction, ce dispositif comprenant lui-même un écrou allongé fixe en rotation dont une première de ses deux extrémités reçoit une vis sélectivement rotative qui s'y trouve engagée par une première de ses deux extrémités, la seconde extrémité de l'écrou étant susceptible de recevoir une poussée de l'actionneur mécanique, et la seconde extrémité de la vis traversant le piston de façon étanche pour être soumise à la pression atmosphérique et présentant un épaulement conique susceptible d'être sélectivement bloqué en rotation par une surface conique interne du piston, fixe en rotation, contre laquelle cet épaulement se trouve appuyé avec une force croissant avec la pression du fluide hydraulique.

Un moteur de frein de ce type est par exemple connu dans l'art antérieur par le document EP-A-0 249 522, et en particulier illustré par la Figure 4 de ce document.

"Par ailleurs, le document FR-A- 2 638 214 décrit un moteur de frein comportant un corps essentiellement cylindrique rempli d'un fluide hydraulique à une pression variable ; un actionneur mécanique comportant un organe de commande accessible depuis l'extérieur de ce corps ; un piston de frein obturant ce corps de façon étanche et susceptible d'y coulisser sous l'effet de l'actionneur pour actionner à son tour au moins un organe de friction ; et un dispositif de réglage automatique disposé à l'intérieur du corps entre l'actionneur mécanique et le piston pour rattraper les jeux résultant de l'usure de l'organe de friction, ce dispositif comprenant lui-même un écrou selectivement rotatif qui reçoit une vis fixe en rotation qui s'y trouve engagée, une extrémité de la vis étant susceptible de recevoir une poussée de l'actionneur mécanique et l'autre extrémité de la vis traversant le piston de façon étanche pour être soumise à la pression atmosphérique, une extrémité de l'écrou présentant un épaulement conique susceptible d'être sélectivement bloqué en rotation par une surface conique interne au piston, fixe en rotation, contre laquelle cet épaulement se trouve appuyé avec une force croissant avec la pression du fluide hydraulique, l'actionneur mécanique étant du type de ceux qui comprennent deux plateaux dotés d'une possibilité de rotation relative , un plateau étant solidaire d'une extrémité de la tige, et l'autre plateau étant relié à un axe traversant le corps de façon étanche.

La conception des moteurs de freins, quels que soient leur structure, leur encombrement et leurs spécifications fonctionnelles, cherche en permanence à réduire le nombre de pièces, simplifier la fabrication, diminuer l'encombrement et augmenter, si c'est encore possible, la fiabilité de ces dispositifs, qui sont produits en grande série.

L'invention se situe dans ce contexte et propose un moteur de frein de grande compacité, de haute fiabilité, et de réalisation très simple, essentiellement caractérisé en ce que l'actionneur mécanique est du type de ceux qui comprennent deux plateaux dotés d'une possibilité de rotation relative, en ce que le premier plateau est solidaire de la seconde extrémité de l'écrou allongé, et en ce que le second plateau est relié à un axe traversant le corps de façon étanche.

Grâce à cette conception, l'écrou allongé et le premier plateau forment ensemble une seule pièce à double fonction et l'actionneur mécanique, noyé dans le fluide hydraulique, est à la fois lubrifié et protégé des effets de la pollution externe.

Selon une caractéristique très avantageuse de l'invention, l'axe du second plateau est creux, et l'écrou allongé et le premier plateau d'une part, et le second plateau et son axe d'autre part, sont obtenus par le même procédé de fabrication, ce qui permet de simplifier encore la fabrication de ce moteur de frein.

D'autres caractéristiques et avantages de l'invention ressortiront clairement de la description qui en est faite ci-après, à titre indicatif et nullement limitatif, en référence aux deux figures annexées représentant, en coupe, deux variantes très voisines de l'invention.

L'invention concerne un moteur de frein comprenant un corps essentiellement cylindrique 1 rempli d'un liquide de frein soumis à une pression variable et solidaire d'un étrier 2.

Un actionneur mécanique 3, comportant un levier de commande rotatif 3a accessible depuis l'extérieur du corps, est par ailleurs logé à l'intérieur de ce dernier.

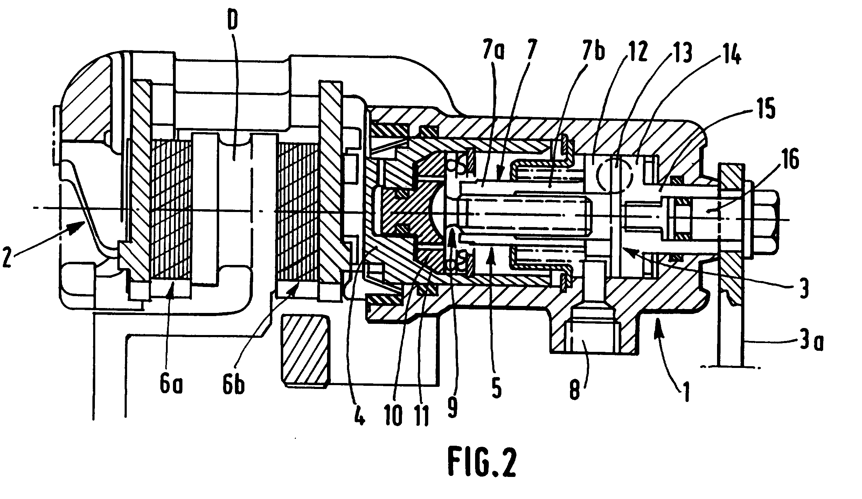

Un piston de frein 4 est monté coulissant dans le corps 1 qu'il obture de façon étanche, le déplacement de ce piston étant commandé par l'actionneur 3 à travers une entretoise 5 de longueur variable, et permettant l'application sur un disque rotatif D (figure 2) de deux organes de friction 6a, 6b dont l'un est maintenu par l'étrier 2 et l'autre poussé par ce piston.

L'entretoise 5, qui fait partie d'un dispositif de réglage automatique destiné à rattraper les jeux résultant de l'usure des organes de friction, comprend d'une part un écrou allongé 7 bloqué en rotation par un pion 8 solidaire du corps 1 et d'autre part une vis 9, la première extrémité 9a de la vis étant engagée sur la première extrémité 7a de l'écrou.

La seconde extrémité 9b de la vis traverse le piston 4 de façon étanche pour être soumise à la pression atmosphérique, et présente un épaulement conique 10 susceptible de s'appuyer contre une surface conique interne 11 du piston 4.

L'écrou allongé 7 et la vis 9 sont sollicités par des ressorts dans un sens propre à les dévisser l'un de l'autre et à augmenter corrélativement la longueur de l'entretoise 5 qu'ils constituent ensemble, la force de ces ressorts étant appliquée sur la vis 9 par l'intermédiaire d'un coussinet à roulement pour permettre, lors de l'accroissement de la pression du liquide de frein, une rotation de la vis jusqu'à la position où l'épaulement conique 10 se trouve bloqué en rotation par la surface interne 11 du piston 4.

Selon l'invention, l'actionneur mécanique 3 est du type à plateau rotatif à cames et à billes, connu en soi, et comprend un premier plateau 12 disposé à la seconde extrémité 7b de l'écrou allongé 7 et formant une seule pièce avec lui, des billes telles que 13, et un second plateau 14 relié à un axe 15 traversant le corps de façon étanche et donnant prise au levier de commande 3a, un coussinet à roulement étant disposé entre le corps 1 et le second plateau 14 pour permettre la rotation aisée de ce dernier.

En outre, l'axe 15 du second plateau 14 est très préférablement creux, de manière que le premier plateau 12 et l'écrou 7 d'une part, et le second plateau 14 et l'axe 15 d'autre part, puissent être réalisés à partir de pièces identiques, produites par un même procédé de fabrication telle que moulage, extrusion, et/ou emboutissage.

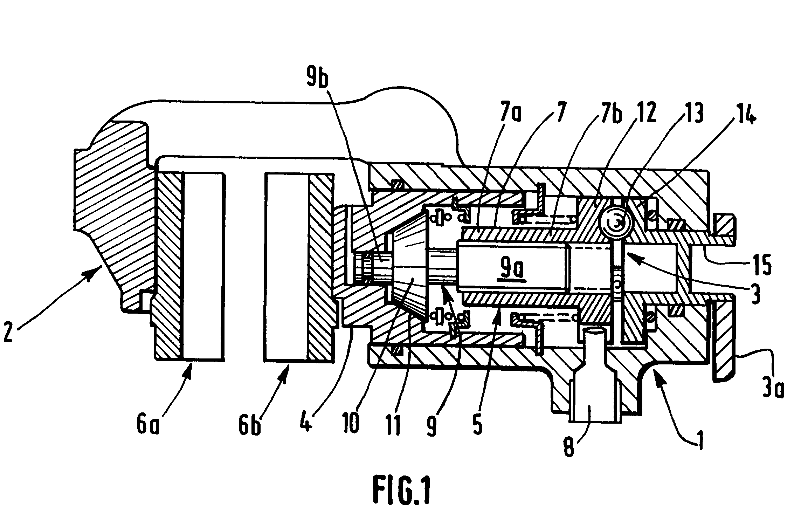

L'axe 15 peut, comme le montre la figure 1, être fermé par une cloison axiale 15a ou, comme le montre la figure 2, par une vis 16 qui sert à le rendre solidaire du levier de commande 3a.

## Revendications

1. Moteur de frein comprenant : un corps (1) essentiellement cylindrique rempli d'un fluide hydraulique soumis à une pression variable ; un actionneur mécanique (3) comportant un organe de commande (3a) accessible depuis l'extérieur de ce corps ; un piston de frein (4) obturant le corps de façon étanche et susceptible d'y coulisser sous l'effet de l'actionneur pour actionner à son tour au moins un organe de friction (6a, 6b) ; et un dispositif de réglage automatique (5) disposé à l'intérieur du corps entre l'actionneur mécanique et le piston pour rattraper les jeux résultant de l'usure de l'organe de friction, ce dispositif comprenant lui-même un écrou allongé (7) fixe en rotation dont une première (7a) de ses deux extrémités reçoit une vis (9) sélectivement rotative qui s'y trouve engagée par une première (9a) de ses deux extrémités, la seconde extrémité de l'écrou étant susceptible de recevoir une poussée de l'actionneur mécanique, et la seconde extrémité (9b) de la vis traversant le piston de façon étanche pour être soumise à la pression atmosphérique et présentant un épaulement conique (10) susceptible d'être sélectivement bloqué en rotation par une surface conique interne (11) du piston, fixe en rotation, contre laquelle cet épaulement se trouve appuyé avec une force croissant avec la pression du fluide hydraulique, l'actionneur mécanique (3) étant du type de ceux qui comprennent deux plateaux (12, 14) dotés d'une possibilité de rotation relative, le premier plateau (12) étant solidaire de la seconde extrémité (7b) de l'écrou allongé, et le second plateau (14) étant relié à un axe (15) traversant le corps de façon étanche.

2. Moteur de frein selon la revendication 1, caractérisé en ce que ledit axe (15) du second plateau est creux et en ce que l'écrou allongé et le premier plateau d'une part et le second plateau et son axe d'autre part sont obtenus par le même procédé de fabrication.

## Patentansprüche

1. Bremsbetätigungsvorrichtung mit: einem im wesentlichen zylindrischen Körper (1), der mit einem einem variablen Druck ausgesetzten Hydraulikfluid gefüllt ist; einer mechanischen Betätigungsvorrichtung (3), welche ein von außerhalb des Körpers zugängliches Steuerorgan (3a) aufweist; einem Bremskolben (4), welcher den Körper in dichter Weise verschließt und in diesem unter der Wirkung der Betätigungsvorrichtung leiten kann, um seinerseits wenigstens ein Reiborgan (6a, 6b) zu betätigen; und einer automatischen Regulierungsvorrichtung (5), die im Inneren des Körpers zwischen der mechanischen Betätigungsvorrichtung und dem Kolben angeordnet ist, um das sich aus dem Verschleiß des Reiborgans ergebende Spiel aufzunehmen, wobei diese Vorrichtung wiederum eine langgestreckte, drehfeste Mutter (7) aufweist, von deren beiden Enden ein erstes Ende (7a) eine selektiv drehbare Schraube (9) aufnimmt, welche hier mittels eines ersten Endes (9a) ihrer beiden Enden eingreift, wobei das zweite Ende der Mutter einen Schub der mechanischen Betätigungsvorrichtung aufnehmen kann, und wobei das zweite Ende (9b) der Schraube den Kolben in dichter Weise durchquert, um dem Atmosphärendruck ausgesetzt zu sein, und einen konischen Absatz (10) aufweist, der von einer drehfesten konischen Innenfläche (11) des Kolbens, gegen welche dieser Absatz mit einer mit dem Druck des Hydraulikfluides ansteigenden Kraft gedrückt wird, selektiv drehfest gehalten wird, wobei die mechanische Betätigungsvorrichtung (3) ein Typ mit zwei Platten (12, 14) ist, die relativ zueinander drehbar sind, wobei die erste Platte fest mit dem zweiten Ende (7b) der langgestreckten Mutter verbunden ist und die zweite Platte (14) mit einer den Körper in dichter Weise durchquerenden Achse (15) verbunden ist.

2. Bremsbetätigungsvorrichtung nach Anspruch 1, dadurch gekennzeichnet, daß die Achse der zweiten Platte (15) hohl ist und daß die langgestreckte Mutter und die erste Platte zum einen und die zweite Platte und deren Achse zum anderen mittels desselben Herstellungsverfahrens erhalten werden.

## Claims

1. Brake motor comprising: an essentially cylindrical body (1) filled with a hydraulic fluid subjected to a variable pressure; a mechanical actuator (3) comprising a control member (3a) which can be accessed from outside this body; a brake piston (4) shutting off the body in leaktight fashion and capable of sliding therein under the effect of the actuator in order to actuate, in turn, at least one friction member (6a, 6b); and an automatic adjustment device (5) arranged inside the body between the mechanical actuator and the piston in order to take up the play resulting from the wear of the friction member, this device itself comprising a rotationally fixed elongate nut (7) a first (7a) of whose two ends receives a selectively rotary screw (9) which is engaged therein by a first (9a) of its two ends, the second end of the nut being capable of receiving a thrust from the mechanical actuator, and the second end (9b) of the screw passing through the piston in leaktight fashion in order to be subjected to atmospheric pressure and having a tapered shoulder (10) capable of being selectively rotationally blocked by an internal tapered surface (11) of the piston, rotationally fixed, against which this shoulder is pressed with a force which increases with the pressure of the hydraulic fluid, characterised in that the mechanical actuator (3) is of the type of those which comprise two plates (12, 14) capable of relative rotation, in that the first plate (12) is securely fastened to the second end (7b) of the elongate nut, and in that the second plate (14) is connected to a spindle (15) passing through the body in leaktight fashion.

2. Brake motor according to claim 1, characterized in that said spindle (15) of the second plate is hollow, and in that the elongate nut and the first plate, on the one hand, and the second plate and its spindle, on the other hand, are obtained by the same manufacturing method.
